# EUROPÄISCHE PATENTSCHRIFT

(11) **EP 0 976 542 B1**
(45) Veröffentlichungstag und Bekanntmachung des Hinweises auf die Patenterteilung: **27.09.2006**
(21) Anmeldenummer: 99110548.7
(22) Anmeldetag: 01.06.1999
(51) Int. Cl.: B32B 17/10, C03C 17/34, G02B 5/28, C03C 27/12

(54) **Verbundglas und Verfahren zur Herstellung einer beschichteten Kunststoffolie vorzugsweise hierfür**
Laminated glass and method for making a coated plastic sheet therefor
Verre laminé et procédé pour la fabrication d'une feuille en matière plastique revêtue pour le verre laminé

(30) Priorität: 19.06.1998 CH 132298
(43) Veröffentlichungstag der Anmeldung: 02.02.2000
(73) Patentinhaber: Unaxis Trading AG, 9477 Trübbach (CH); Bayerische Motoren Werke Aktiengesellschaft, 80788 München (DE)
(72) Erfinder: Sperger, Reinhard, 6800 Feldkirch (AT); Blueher, Peter, 82041 Oberhaching (DE); Zarfl, Hartmut, 81927 München (DE)
(74) Vertreter: Troesch Scheidegger Werner AG

(56) Entgegenhaltungen:
- WO-A-90/02653
- DE-A- 3 941 796
- DE-A- 4 024 308
- FR-A- 1 313 190
- US-A- 4 581 280
- GRANQVIST C G: "WINDOW COATINGS FOR THE FUTURE" THIN SOLID FILMS, Bd. 193 / 194, Nr. 1 / 02, 15. Dezember 1990 (1990-12-15), Seiten 730-741, XP000168553

## Beschreibung

Die vorliegende Erfindung betrifft ein Verfahren zur Herstellung eines Verbundglas-Wärmeschutzsystems nach dem Oberbegriff von Anspruch 1.

Es sollen vorerst einige verwendete Grössen definiert werden:

### Sichtbarer Lichtbereich:

Spektralbereich zwischen 380 nm und 780 nm,

### Sonnenlicht:

Spektralbereich von 200 nm bis 2500 nm,

### Nahes Infrarot:

Spektralbereich zwischen 780 nm und 1200 nm,

### Reflexionskoeffizient R_{VIS}:

mit der Spektrallichtempfindlichkeit des menschlichen Auges gewichtetes Verhältnis zwischen reflektiertem und einfallendem Licht: 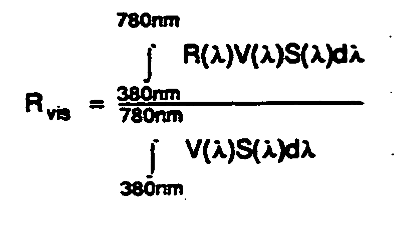 worin bezeichnet:
- R(λ): Reflexionswert bei einer bestimmten Wellenlänge λ,
- V(λ): spektraler Hellempfindlichkeitswert des menschlichen Auges,
- s(λ): spektrale Strahlungsverteilung von Normlicht D65 (Farbtemperatur 6500K).

### Transmissionskoeffizient Tᵥᵢₛ:

- mit der spektralen Lichtempfindlichkeit des menschlichen Auges gewichtetes Verhältnis zwischen transmittiertem und einfallendem Licht: ${T}_{vis} = \frac{{\int }_{380 nm}^{780 nm} T ( λ ) V ( λ ) S ( λ ) d λ}{{\int }_{380 nm}^{780 nm} V ( λ ) S ( λ ) d λ}$
worin weiter bezeichnet:
T(λ) Transmissionswert bei einer bestimmten Wellenlänge λ,

### Transmissionskoeffizient T_{SONNE}:

- mit der spektralen Strahlungsverteilung der Sonne gewichtetes Verhältnis zwischen transmittiertem Licht und einfallendem Licht: ${T}_{SONNE} = \frac{{\int }_{200 nm}^{2500 nm} T ( λ ) {S}_{s} ( λ ) d λ}{{\int }_{200 nm}^{2500 nm} {S}_{s} ( λ ) d λ}$
worin bezeichnet:
- S_{S}(λ): spektrale Verteilung der Sonnenstrahlung.

### Reflexionskoeffizient R_{SONNE}:

- mit der spektralen Strahlungsverteilung der Sonne gewichtetes Verhältnis zwischen reflektiertem Licht und einfallendem Licht: ${R}_{SONNE} = \frac{{\int }_{200 nm}^{2500 nm} R ( λ ) {S}_{s} ( λ ) d λ}{{\int }_{200 nm}^{2500 nm} {S}_{s} ( λ ) d λ}$

### Absorption A_{SONNE}:

${A}_{SONNE} = \frac{{\int }_{200 nm}^{2500 nm} A ( λ ) {S}_{s} ( λ ) d λ}{{\int }_{200 nm}^{2500 nm} {S}_{s} ( λ ) d λ}$
worin weiter:
- A(λ): der Absorptionswert bei einer bestimmten Wellenlänge λ bedeutet.

### Sonnenerwärmungskennzahl :

${E}_{SONNE} = {T}_{SONNE} + {A}_{SONNE} / 2$

Je kleiner E_{SONNE} eines Sonnenstrahlungs-Schutzsystems ist, desto besser ist dessen Schutzwirkung.

Der minimal mögliche Wert für E_{SONNE} für Autoscheiben ist dadurch gegeben, dass im sichtbaren Spektralbereich eine Mindesttransmission gefordert ist, z.B. von 75 % für Windschutzscheiben von Autos laut ECE-Norm Nr. 43. Beschrieben wird Eₘᵢₙ,_{Sonne} durch das sogenannte "Idealglas". Es weist im sichtbaren Spektralbereich eine geforderte gleichmässige Transmission von z.B. 75 % auf, entsprechend eine gleichmässige Absorption von 25 % und weist im Ultraviolett-Bereich (λ < 380 nm) sowie im Infrarotbereich (λ > 780 nm) eine gleichmässige Reflexion von 100 % auf. Damit würde die maximale Sonnenschutzwirkung erreicht und gleichzeitig die Norm von 75 % Transmission im sichtbaren Spektralbereich erfüllt.

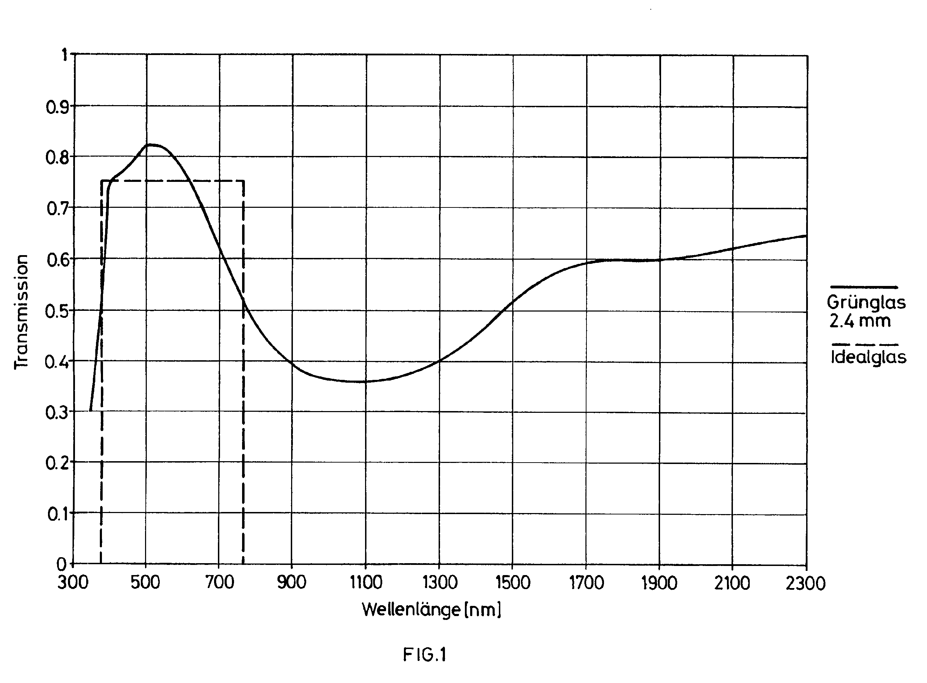

Schutz vor Sonneneinstrahlung wird heute im wesentlichen durch zwei Ansätze realisiert:
- Absorbierendes Glas, z.B. "Grünglas": Grünglas ist gefärbtes, absorbierendes Glas, das im sichtbaren Spektralbereich in Transmission grünlich erscheint. Eine typische Transmissionskurve für senkrecht einfallendes Licht und über den gesamten Sonnenlicht-Spektralbereich ist (ausgezogen) in Fig. 1 dargestellt, gemeinsam mit dem Transmissionsverlauf des oben erwähnten Idealglases (gestrichelt). Je nach Konzentration der Einfärbung und der Dicke des Glases kann die Absorption verstärkt oder verringert werden, wobei aber - der Kurvenverlauf bleibt qualitativ erhalten - auch die Transmission im sichtbaren Spektralbereich mitvariiert.
   Absorbierendes Glas ist in der Sonnenschutzwirkung begrenzt, da es nur über Absorption wirksam ist, welche gemäss E_{SONNE} ebenfalls zur Aufheizung eines der Sonneneinstrahlung abgewandten Raumes führt, so insbesondere zur Aufheizung eines mit einem solchen Sonnenschutzsystem versehenen Fahrzeuginnenraumes. Ausserdem ist die Steilheit der Absorptionskante zwischen sichtbarem Spektralbereich und nahem Infrarot-Spektralbereich begrenzt; wenn im sichtbaren Spektralbereich eine Mindesttransmission gefordert ist, kann die Transmission im nahen Infrarotspektralbereich nicht beliebig tief realisiert werden.
- Sogenannte D/M/D-Schichtsysteme (dielektrische Schicht/Metallschicht/dielektrische Schicht), die entweder auf Glassubstrate, wie insbesondere auf Automobilscheibenglas direkt oder auf eine Folie, meistens auf eine Polyesterfolie, aufgebracht werden, welch letztere anschliessend in ein Verbundglas eingebaut wird. Dabei wird die mit der Beschichtung versehene Kunststoffolie typischerweise über Polyvinylbutyral-PVB-Folien zu einem Verbundglas assembliert. Als typische dielektrische Schichtmaterialien werden Oxyde von Zn, Ti, In etc. eingesetzt, als Metallschicht insbesondere Silber.

Dabei ist es bekannt, dass Silber am besten geeignet ist, effizient Licht im sichtbaren Spektralbereich und Licht im infraroten Spektralbereich zu trennen. Aufgrund seiner optischen Konstanten, nämlich Brechwert n und Extinktionskonstante k, erlaubt Silber eine hohe Transmission im sichtbaren Spektralbereich und eine hohe Reflexion im nahen Infrarot-Spektralbereich, wozu auf (1) H.A. Macleod, "Thin Film Optical Filter", Second Edition, Adam Hilger Ltd. Verlag, S. 292 ff., verwiesen sei.

Ebenso bekannt ist aber, dass Silber sehr anfällig gegen Umwelteinflüsse ist, wie auf Feuchtigkeit, Bildung von Silbersulfid etc., und zwar unabhängig davon, ob das Schichtsystem auf Glas oder auf eine Kunststoffolie aufgebracht wird. Diesbezüglich kann auf folgende Literatur verwiesen werden:
- US 5 532 062: ZnO/Ag/ZnO; um die Umweltbeständigkeit zu erhöhen, wird Zn bzw. ZnO dotiert (z.B. mit Si, Ti, Cr,...)
- US 5 320 893: D/M/D; hier wird ein Schutz-System durch eine spezielle Glasverbundtechnik "versiegelt" und so gegen Umwelteinflüsse geschützt.
- US 5 510 173: D/M/D; um die Umweltbeständigkeit eines SchutzSystems zu erhöhen, wird es zu einem D/M/DD modifiziert (typisch Indium-Oxid/Ag/Indium-Oxid/Indium-Zinn-Oxid)
- DE 30 27 256: D/M/D; um die Umweltbeständigkeit zu erhöhen, werden die dielektrischen Schichten eines Schutz-Systems als Metall-Oxid-Nitrid-Verbindung ausgebildet.

Charakteristisch für die Eigenschaften eines D/M/D-Systems ist, dass die geforderte Transmission im sichtbaren Spektralbereich nur durch Reflexionsunterdrückung der metallischen Schicht erreicht werden kann, wozu wiederum auf (1) verwiesen sei. Dies ist nur für einen schmalen Wellenlängenbereich möglich, und Licht, welches durch das D/M/D-System transmittiert wird, wird daran auch stark absorbiert. Dadurch ergeben sich insbesondere folgende zwei Nachteile:
- Mit steigender Metallschichtdicke steigt sowohl die Absorption im sichtbaren reflexionsunterdrückten Spektralbereich als auch die Reflexion im Infrarotbereich an. Das führt dazu, dass die Metallschichtdicke nicht frei gewählt werden kann, sondern so eingestellt werden muss, dass die Transmission im sichtbaren Spektralbereich noch die geforderten Werte von beispielsweise 75 % erreicht. Soll eine höhere Transmission im sichtbaren Spektralbereich erreicht werden, führt das automatisch zu einer geringeren Infrarot-Reflexion und damit einer geringeren Sonnenschutzwirkung.
- Die Reflexionsunterdrückung im sichtbaren Spektralbereich weist eine sogenannte "V-Charakteristik" auf, d.h. die Reflexion ist minimal für eine bestimmte Wellenlänge, zu kürzeren und höheren Wellenlängen hin steigt sie jedoch stark an. Da das menschliche Auge im grünen Spektralbereich am empfindlichsten ist, wird das Reflexionsminimum in den grünen Spektralbereich gelegt, um mit der höchstmöglichen Metallschichtdicke zu arbeiten, die wiederum die effizienteste Blockung des nahen Infrarotes ergibt. Dadurch ergibt sich zwangsläufig eine Reflexion, die bläulich/rötlich, d.h. lila, erscheint. Jede Änderung der Reflexionsfarbe, die vor allem durch ästhetische Aspekte erwünscht sein kann - relevant bei der Betrachtung einer Scheibe von aussen, da sich hier eine helle Umgebung in der Scheibe spiegelt, deren Hintergrund - das Fahrzeuginnere - relativ dunkel ist -, kann nur auf Kosten der Schutzwirkung gegen die nahe Infrarotstrahlung erzielt werden. Hierzu sei verwiesen auf US 4 965 121, wo ein D/M/D-System vorgestellt wird, dessen Reflexionsfarbe neutral bis bläulich ist. Anhand der dort aufgeführten Beispiele ist nachvollziehbar, dass ein Trade Off besteht zwischen Farbneutralität und Sonnenstrahlungsschutz.
- Im weiteren sind D/M/D-Systeme elektrisch leitfähig. Das hat den Vorteil, dass damit z.B. eine elektrisch heizbare Scheibe oder auch eine sogenannte "Low Emissivity"-Scheibe realisiert werden kann (niedriger Emissionskoeffizient im fernen Infrarot, wodurch der Energieverlust durch Wärmestrahlung im Raumtemperatur-Bereich reduziert wird). Dem steht aber der wesentliche Nachteil gegenüber, dass eine mit D/M/D-System versehene Scheibe undurchlässig wird für elektromagnetische Frequenzen, die für den Betrieb von Infrarot-Fernbedienungen, Radio, Mobiltelefon, GPS etc. im Auto oder aus dem Auto heraus notwendig sind. Zudem ist es wesentlich aufwendiger, sogenannte "Antennenscheiben" zu realisieren, bei denen Antennen in die Verbundscheibe integriert werden, weil bei der Verwendung von D/M/D-Systemen entsprechende Bereiche der Scheibe, bei der Beschichtung, ausmaskiert werden müssen oder gegebenenfalls beim Verbundprozess, was einen beträchtlichen Zusatzaufwand bedeutet.

Aus der D-A-4024308 ist ein Verfahren zur Herstellung eines Verbundglas-Wärmeschutzsystems bekannt, bei welchem eine Kunststofffolie sowie eine ausschliesslich aus dielektrischen Schichten bestehende Schutzbeschichtung zwischen Glasplatten eingebettet wird. Die Wärmeschutzbeschichtung wird auf den Glasplatten vorgenommen.

Wenn die Beschichtung am Verbundglas auf eine oder auf beide Glassubstratlage(n) aufgebracht wird, ist dies insofern nachteilig, dass dann, wenn die Beschichtung auf vorerst planes Glas aufgebracht wird, dieses im Zuge des Fertigungsprozesses, beispielsweise für eine Autoscheibe, eigentlich zu früh kostenaufwendig veredelt wird und damit der Ausschuss bei folgenden Fertigungsschritten, z.B. durch Schnittabfall, durch Fehler beim Biegeprozess der Scheibe, durch Fehler bei der Verbundherstellung etc., kostenmässig ins Gewicht fällt. Ausserdem bedeutet das beispielsweise bei Autoscheiben vorzunehmende Biegen von vorab beschichteten Glasscheiben eine hohe Temperaturbelastung (> 600°C) der bereits vorgesehenen Beschichtung, was zu Problemen bezüglich Haftung führen und auch die optischen Eigenschaften der Beschichtung verändern kann, wozu auf die EP-0 308 578 bezüglich biegbarer D/M/D-Systeme auf planem Glas verwiesen sei. Anderseits ergibt sich aus dem Beschichten fertig geschnittener Glassubstrate, dass der Beschichtungs- und Handlingprozess selektiv auf viele verschiedene Substratgrössen abgestimmt werden muss. Das Beschichten bereits vorgebogener Glasscheiben erhöht die Fertigungskomplexität noch weiter, da dann die Schichtdickenverteilung auf die unterschiedlichen Krümmungen abgestimmt werden muss.

Ausgehend von einem Verfahren obgenannter Art ist es Aufgabe der vorliegenden Erfindung, den Fertigungsprozess für das Verbundglas-Wärmeschutzsystem wesentlich flexibler zu gestalten sowie wesentlich kostengünstiger.

Dies wird bei Ausbildung des genannten Verfahrens nach dem Kennzeichen von Anspruch 1 erreicht.

Es wird beim Verbundglas eine eingebettete Kunststoffolie vorgesehen, woran mindestens ein Teil von die Beschichtung bildenden Schichten aufgebracht ist.

Damit werden alle vorerwähnten Nachteile von D/M/D-Systemen und zusätzlich auch die Nachteile von Systemen mit beschichteten Gläsern - alles in der Fachwelt notorisch bekannte Probleme - überraschend einfach gelöst.

Das Verbundglas weist zwei äussere Glasscheiben - oder zwei Strukturen von Glaslagen auf, woran auch eine Panzerglaslage vorgesehen sein kann - und mindestens eine dazwischen angeordnete beschichtete Folie auf. Dabei wird bevorzugterweise die eine der Glasscheiben als Grünglas, die andere als Klarglas ausgebildet.

Es wird ein Verbundglas-Wärmeschutztsystem hergestellt, welches elektromagnetische Felder nicht abschirmt und womit z.B. Antennenscheiben einfach realisierbar sind, und
- dessen farbliches Aussehen, insbesondere bei bevorzugten Ausführungsformen, flexibel wählbar ist,
- woran die Beschichtung umweltstabil ist, und
- das insbesondere in bevorzugten Ausführungsformen in der Fertigung kostengünstig und mit flexibel variabler Beschichtung realisierbar ist,
- bezüglich Sonnenschutz eine effiziente Trennung von Transmission im sichtbaren Spektralbereich und Reflexion im nahen Infrarot-Spektralbereich ermöglicht,
- insbesondere in bevorzugter Ausführungsform, die Vorteile folienbasierter Systeme gegenüber Glassystemen (s. auch weiter unten) sichert.

Wie erwähnt ist mindestens ein Teil der die Beschichtung bildenden dielektrischen Schichten auf der Kunststoffolie, dabei vorzugsweise auf einer PET-Folie, vorgesehen.

Bevorzugterweise wird das Reflexionsmaximum bei einer Wellenlänge λ gewählt, für die gilt: $800 nm \leq λ \leq 1100 nm ,$ dabei bevorzugterweise $850 nm \leq λ \leq 1000 nm .$

Im weiteren umfasst die Beschichtung vorzugsweise mindestens ein Schichtsystem mit mindestens einer hochbrechenden Schicht und mindestens einer niedriger brechenden Schicht, wobei für den Brechwert des Materials der hochbrechenden Schicht, n_{H} vorzugsweise gilt: ${n}_{H} \geq 2 , 40 , vorzugsweise {n}_{H} \geq 2 , 45 , bzw . gar {n}_{H} \geq 2 , 55.$ und für den Brechwert des Materials der niedriger brechenden Schicht, n_{L}: ${n}_{L} \leq 1 , 7 , vorzugsweise {n}_{L} \leq 1 , 50 ,$ alle Werte jeweils bei Licht mit λ = 550 nm gemessen.

Im weiteren beträgt die Packungsdichte der für die Beschichtung verwendeten Materialien vorzugsweise mindestens 95 %, vorzugsweise gar mindestens 97 %. Diese Dichte ist bezogen auf die Dichten der verwendeten Materialien im Bulk.

Weiter ist vorzugsweise die Beschichtung röntgenamorph. Im weiteren beträgt die spektrale Temperaturshift beispielsweise des Transmissionsspektrums der Beschichtung höchstens 0,5 % im Temperaturbereich zwischen 20°C und 120°C. Bevorzugterweise werden als Materialien mindestens einer hochbrechenden Schicht der Beschichtung mindestens eines aus der Gruppe Oxide oder Oxinitride von Ti, Ta, Hf, Zr, Zn eingesetzt, dabei insbesondere bevorzugt TiO₂.

Als Material der mindestens einen an der Beschichtung vorgesehenen, niedriger brechenden Schicht wird vorzugsweise mindestens eines der Materialien folgender Gruppe eingesetzt: SiOₓ, SiON, SiO₂, dabei insbesondere bevorzugt SiO₂.

Rein dielektrische Schichten sind bekannt als weitestgehendst absorptionsfrei im sichtbaren Spektralbereich. Bei Verwendung von z.B. SiO₂/TiO₂-Schichtsystemen sind Absorptionswerte des gesamten Schichtsystems von weniger als 3 % durchaus üblich. Für Sonnenschutzsysteme ist aber eine geringe Absorption nicht unbedingt erforderlich, da, beispielsweise nach ECE-Norm Nr. 43, die Transmission einer Windschutzscheibe im sichtbaren Spektralbereich lediglich mindestens 75 %, einer beliebigen, anders eingesetzten Scheibe lediglich mindestens 70 % betragen muss. Um mithin eine optimale Sonnenschutzwirkung zu erzielen, ist es sinnvoll, die verbleibenden 25 % bzw. 30 % sichtbarer Sonnenstrahlung entweder zu reflektieren oder zu absorbieren, wenn dadurch das spektrale Trennverhalten des Systems verbessert wird. Deshalb wird vorgeschlagen, dass die Beschichtung im sichtbaren Spektralbereich eine Absorption von mehr als 3 % aufweist, vorzugsweise von wesentlich mehr.

Damit, dass doch beträchtliche Absorptionswerte im sichtbaren Spektralbereich zugelassen werden können, können bei der Fertigung des Verbundglases wesentlich höhere Beschichtungsraten gefahren werden, was ja üblicherweise zu einem Anstieg der resultierenden Schichtabsorption führt. Im weiteren können aus erwähntem Grunde auch Materialien eingesetzt werden, die einen höheren Brechwert n_{H} besitzen, was in der Praxis meistens auch mit einem erhöhten Absorptionskoeffizienten verbunden ist. So kann als Material mindestens einer hochbrechenden Schicht an der Beschichtung durchaus HfON oder andere Oxinitride von Ti, Ta, Zr etc. eingesetzt werden, mit Brechwerten bis 2,8 oder noch höher.

Das Herstellungsverfahren wird bevorzugt so geführt, dass das Verbundglas folgende Kriterien aufweis, einzeln oder bevorzugt kombiniert:
a) ${E}_{SONNE} \leq 65 % ,$ vorzugsweise ${E}_{SONNE} \leq 60 % .$
b) ${T}_{VIS} \geq 70 % ,$ vorzugsweise ${T}_{VIS} \geq 75 % .$
c) ${T}_{SONNE} \leq 55 % ,$ vorzugsweise dabei ${T}_{SONNE} \leq 50 % .$
d) ${R}_{SONNE} \geq 20 % ,$ vorzugsweise ${R}_{SONNE} \geq 23 % .$

Im weiteren wird bevorzugt das Verbundglas als Teil eines Fensters, vorzugsweise eines Fahrzeugfensters, wie eines Auto-, Flugzeug- oder Eisenbahnfensters, erstellt. Es wurden unter wirtschaftlichen Gesichtspunkten optimal hohe Beschichtungsraten durch Einsatz von Magnetronsputtern, insbesondere bevorzugt durch DC-Magnetronsputtern, erreicht. Dies schliesst aber nicht aus, dass sich auch nicht reaktives Sputtern, insbesondere Hochfrequenz-Sputtern, Sputtern unter Einsatz von DC und überlagertem AC oder Sputtern mit gepulster DC-Spannung oder mit AC für die erfindungsgemässe Herstellung der Folie eignet. Dabei wird bezüglich reaktivem Sputterbeschichten dielektrischer Schichtmaterialien insbesondere auf die EP-A-564 789 bzw. die US-Anmeldung Nr. 08/887 091 verwiesen, bzw. bezüglich gechoppertem DC-Sputtern dielektrischer Schichtmaterialien insbesondere auf die EP-A-508 359 bzw. die US-A-5 292 417.

Die Erfindung wird anschliessend anhand von Beispielen, Resultaten und weiteren Figuren beispielsweise erläutert. In den Figuren zeigen:
- Fig. 1: den spektralen Transmissionsverlauf von Grünglas mit einer Dicke von 2,4 mm und, gestrichelt, des sogenannten "Idealglases", bei senkrechtem Lichteinfall,
- Fig. 2: schematisch eine Querschnittsdarstellung durch ein erfindungsgemäss hergestelltes Verbundglas, in einer Ausführungsform,
- Fig. 3: zwei spektrale Transmissionsverläufe, entsprechend den noch vorgestellten Beispielen, bei senkrechtem Lichteinfall,
- Fig. 4: in einem Diagramm, die CIE-Koordinatenwerte für Normlicht D65 unter einem Betrachtungswinkel von 45° in Reflexion.

Die Beschichtung wird auf einer Kunststoffolie, vorzugsweise einer PET-Folie, aufgebracht, wobei vom vorgesehenen, die Beschichtung bildenden Schichtsystem gezielt gewisse Schichten direkt auf dem einen und/oder andern Glassubstrat sowie ein- oder beidseitig auf der erwähnten, zwischen den Glassubstraten liegenden Folie aufgebracht sein können. Im weiteren können die bezüglich Beschichtung je aussen anschliessenden Glassubstrate aus mehr oder weniger komplexen Abfolgen verschiedener Gläser gebildet sein. Weiter können auch gegebenenfalls zwei oder mehr der Beschichtungen vorgesehen sein. Mindestens eines der erwähnten Glassubstrate kann ein ballistisches Glas umfassen oder daraus bestehen.

Die Beschichtung weist vorzugsweise weiter eine Abfolge mit mindestens einer Schicht eines hochbrechenden Materials H und mindestens einer nachfolgenden Schicht niedriger brechenden Materials L auf. Die erfindungsgemäss vorgesehene Beschichtung ergibt mithin z.B. eine Schichtabfolge: ${( H , L )}_{x} , H oder H {( H , L , H )}_{x} , H$
wobei x = 1, 2, 3 oder mehr sein kann.

Die einzelnen Schichten H, L sind genähert λ/4-Schichten, wobei - für die Fertigung ein wesentlicher Aspekt - die geforderten

Schichtdicken bis zu ± 15 % von λ/4 abweichen können, ohne dass sich daraus wesentliche Änderungen des optischen Verhaltens der Beschichtung ergäben, nämlich hohe Reflexion im nahen Infrarot-Spektralbereich und hohe Transmission im sichtbaren Spektralbereich. Hingegen kann, wie erwähnt, ohne wesentliche Beeinflussung des optischen Reflexions- bzw. Transmissionsverhaltens durch flexible Variation der Schichtdicken im Rahmen der angegebenen Abweichungen vor allem der farbliche Eindruck der Reflexion und damit das optische Aussehen des Verbundglasses beeinflusst werden.

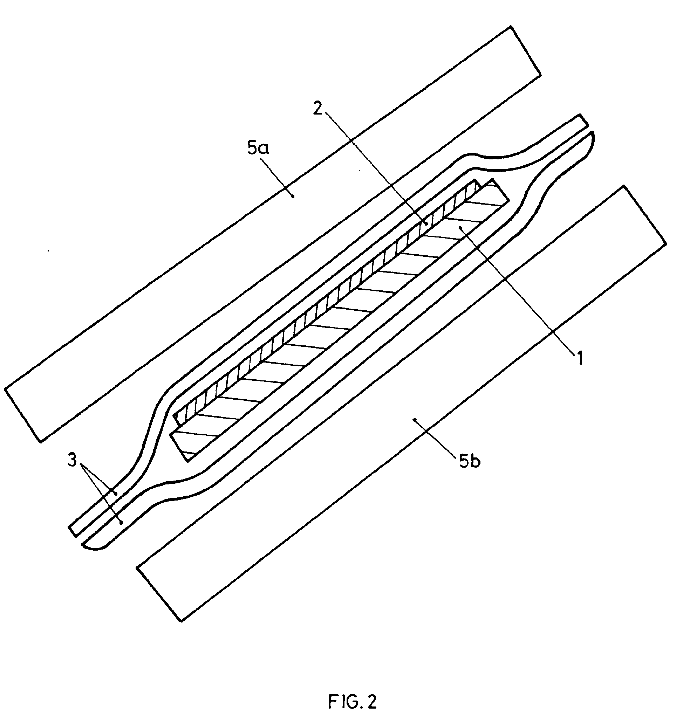

In Fig. 2 ist schematisch der Querschnitt durch ein erfindungsgemäss hergestelltes Verbundglas in bevorzugter Ausführungsform dargestellt. Zwischen zwei Glaslagen 5a und 5b, welche je, wie erwähnt, aus einer komplexen Abfolge verschiedener Gläser bestehen können, liegt eingebettet zwischen zwei Folien 3, vorzugsweise PVB-Folien, eine Beschichtungsträgerfolie 1, vorzugsweise aus PET (Polyethylen-Terephtalat). Auf ihr ist die Beschichtung 2 aufgebracht, bevorzugterweise mit einer Schicht höher brechenden Materials beginnend.

Wie erwähnt, ist in Fig. 2 ein bevorzugtes Ausführungsbeispiel des erfindungsgemäss hergestellten Verbundglases dargestellt. In den nachfolgenden Ausführungsbeispielen wurden die die Beschichtung 2 gemäss Fig. 2 bildenden Schichten auf der PET-Folie 1 für eine Wellenlänge von ca. 950 nm dimensioniert.

Dabei wurde für das Beschichten reaktives DC-Magnetronsputtern eingesetzt. Bezüglich des Beschichtungsverfahrens wird die EP-A-508 359 und die US-A-5 292 417 als integrierter Bestandteil der vorliegenden Beschreibung erklärt.

Es wurden folgende Schichtmaterialien eingesetzt:
H: TiO₂, typisch n_{H} = 2,45
L: SiO₂, typisch n_{L} = 1,47
bzw. Transmissionsverhaltens durch flexible Variation der Schichtdicken im Rahmen der angegebenen Abweichungen vor allem der farbliche Eindruck der Reflexion und damit das optische Aussehen des Verbundglasses beeinflusst werden.

In Fig. 2 ist schematisch der Querschnitt durch ein erfindungsgemässes Verbundglas in bevorzugter Ausführungsform dargestellt. Zwischen zwei Glaslagen 5a und 5b, welche je, wie erwähnt, aus einer komplexen Abfolge verschiedener Gläser bestehen können, liegt eingebettet zwischen zwei Folien 3, vorzugsweise PVB-Folien, eine Beschichtungsträgerfolie 1, vorzugsweise aus PET (Polyethylen-Terephtalat). Auf ihr ist die erfindungsgemäss vorgesehene Beschichtung 2 aufgebracht, bevorzugterweise mit einer Schicht höher brechenden Materials beginnend.

Wie erwähnt, ist in Fig. 2 ein bevorzugtes Ausführungsbeispiel des erfindungsgemässen Verbundglases dargestellt. In den nachfolgenden Ausführungsbeispielen wurden die die Beschichtung 2 gemäss Fig. 2 bildenden Schichten auf der PET-Folie 1 für eine Wellenlänge von ca. 950 nm dimensioniert.

Dabei wurde für das Beschichten reaktives DC-Magnetronsputtern eingesetzt. Bezüglich des Beschichtungsverfahrens wird die EP-A-508 359 und die US-A-5 292 417 als integrierter Bestandteil der vorliegenden Beschreibung erklärt.

Es wurden folgende Schichtmaterialien eingesetzt:
H: TiO₂, typisch n_{H} = 2,45
L: SiO₂, typisch n_{L} = 1,47

### 1. Ausführungsbeispiel

- Design (Schichtdicken in nm): PET-Folie / 49 nm TiO₂ (49 nm TiO₂, 166 nm SiO₂, 49 nm TiO₂)ₓ, 49 nm TiO₂, mit x = 1, 2, 3. Dabei waren, wie ersichtlich, alle L-Schichten gleich dick, ebenso alle H-Schichten. Dies ergibt für die Fertigung und insbesondere die Beschichtungsprozessführung wesentliche Vorteile.

Die beschichtete PET-Folie wurde, wie schematisch in Fig. 2 dargestellt, insbesondere für die Autoscheibenfertigung zwischen ein inneres Glas 5b aus Grünglas und ein äusseres Glas 5a aus Klarglas eingebracht. In Tabelle 1 sind die Resultate für Beispiel Nr. 1 dargestellt. Es ist ersichtlich, dass mit höherem Wert von x die Sonnenerwärmungskennzahl E_{SONNE} erwünschterweise kleiner wird, dass jedoch die diesbezügliche Verbesserung von x = 1 auf x = 2 wesentlich stärker ist als von x = 2 auf x = 3.

| Beispiel | CIE-Koord. X unter 45° | CIE-Koord. Y unter 45° | R (VIS) unter 45° | T (VIS) unter 0° | T (SONNE) unter 0° | R (SONNE) unter 0° | A (SONNE) unter 0° | E (SONNE) T + A/2 |
|---|---|---|---|---|---|---|---|---|
| Klarglas | 0.313 | 0.329 | 9.8 % | 91.8 % | 88.7 % | 7.9 % | 3.4 % | 90.4 % |
| Grünglas | 0.307 | 0.331 | 8.5 % | 79.8 % | 57.2 % | 5.7 % | 37.1 % | 76 % |
| 1 x = 1 | 0.332 | 0.293 | 10.9 % | 76.5 % | 48.4 % | 23.9 % | 27.7 % | 62 % |
| 1 x = 2 | 0.308 | 0.288 | 11.8 % | 76.5 % | 46.3 % | 28.6 % | 25.1 % | 59 % |
| 1 x = 3 | 0.311 | 0.263 | 11.9 % | 76.5 % | 45.4 % | 30.7 % | 23.9 % | 57 % |
| 2 | 0.309 | 0.322 | 11.6 % | 75.3% | 46.5 % | 31.6 % | 21.9 % | 58 % |
| US 4965121 Example 3 | 0.288* | 0.280* | | 75.0 % | 47.0 % | 30.0 % | 23.0 % | 59 % |
| ldealglas | | | | 75.0 % | 37.3 % | 50.0 % | 12.7 % | 44 % |

| | | | | | | | | |
|---|---|---|---|---|---|---|---|---|
| * In Patent US 4 965 121 nicht explizit angegeben; anhand des angegebenen Designs berechnet. | | | | | | | | |

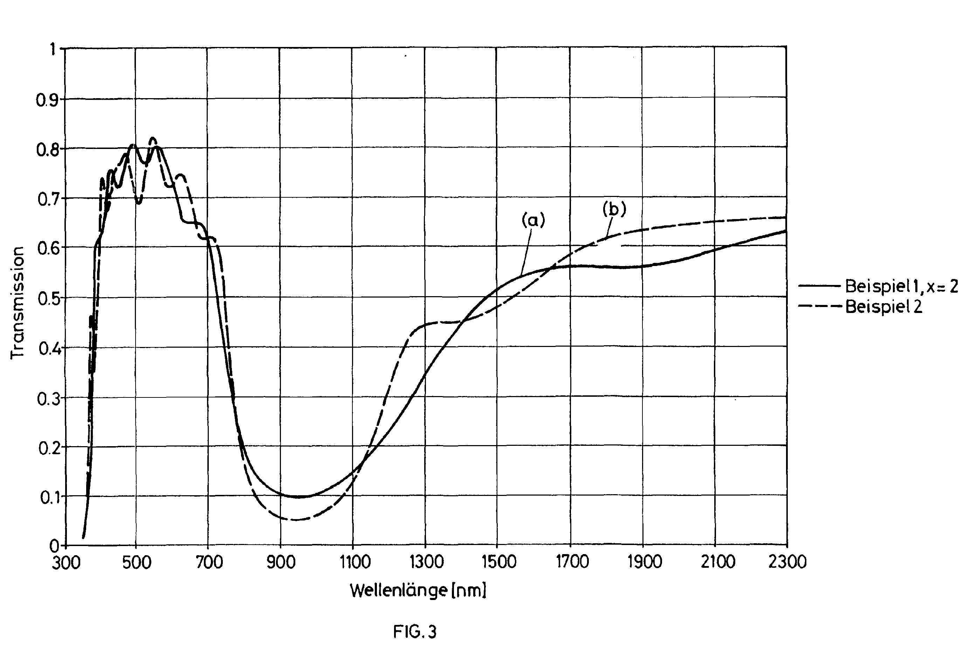

In Fig. 3 zeigt der Verlauf (a) die Transmissionskurve für x = 2, also mit der Struktur H (H, L, H)₂.

### 2. Ausführungsbeispiel

- Design: 102 nm TiO₂, 177 nm SiO₂, 92 nm TiO₂, 171 nm SiO₂, 88 nm TiO₂, 178 nm SiO₂, 93 nm TiO₂.

Wiederum wurde eine PET-Folie mittels DC-Magnetronsputtern beschichtet. Das innere Glas 5b war Grünglas, das äussere 5a Klarglas. Fig. 3 (b) zeigt den resultierenden Transmissionsverlauf.

Im weiteren sind in Tabelle 1 für die dargestellten Beispiele 1, 2 auch die CIE-Koordinatenwerte für Normlicht D65 und die Sonnenschutzkennzahl aufgelistet (CIE-Koordinaten und Normlicht D65 gemäss DIN 5033). Zum Vergleich sind auch die entsprechenden Kenngrössen von normalem Klarglas und von Grünglas sowie von einem D/M/D-Schutzsystem auf Silberbasis gemäss Beispiel 3 der US-A-4 965 121, weiter auch von "Idealglas" aufgelistet. Die CIE-Koordinatenwerte des D/M/D-Systems gemäss der angegebenen US-A 4 965 121 wurden anhand des dort angegebenen Designs berechnet.

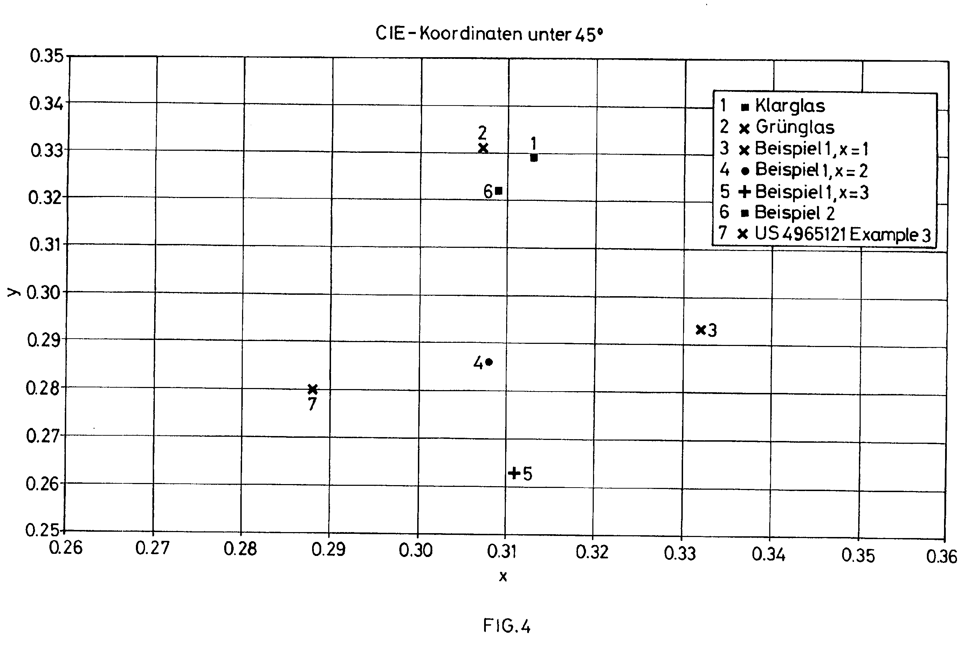

In Fig. 4 sind die CIE-Koordinatenwerte für Klarglas, Grünglas, Beispiel 1 mit x = 1, 2, 3, Beispiel 2 und, berechnet für das D/M/D-System gemäss der US-A-4 965 121, Beispiel 3 dargestellt, für Reflexion unter 45° und bei Betrachtung von aussen (5a).

Die Reflexion im sichtbaren Spektralbereich kann über das dielektrische Schichtsystem eingestellt werden, und zwar nahezu unabhängig von der Reflexion im nahen Infrarot. Die beiden Ausführungsbeispiele weisen eine "mittlere" Reflexion im sichtbaren Spektralbereich von etwa 12 % auf, wobei etwa 9 % durch die Reflexion an den beiden Glas/Luft-Grenzflächen gegeben ist, und etwa 3 % durch das Schichtsystem verursacht werden. Der Fachmann kann das Schichtsystem einfach modifizieren, so dass z.B. durch Verringerung der äussersten H-Schichtdicke eine "hohe" Reflexion, z.B. > 20 %, im sichtbaren Spektralbereich erreicht werden kann, oder dass z.B. durch das Einfügen von Anpassschichten (matching layers) zwischen eigentlichem λ/4-Schichtpaket und der Luftumgebung eine "niedrige" Reflexion erreicht werden kann, z.B. < 10 %, die sich dann zusammensetzt aus 9 % Reflexion der Glas/Luft-Grenzflächen und < 1 % Reflexion des Schichtsystems.

Bevorzugt wird eine mittlere Reflexion, da bei zu niedriger Reflexion die Reflexionsfarbe empfindlicher auf Winkeländerungen reagiert und schwerer reproduzierbar ist und sich bei hoher Reflexion das Umfeld, beispielsweise ein Armaturenbrett bei einer Autoscheibe, störend widerspiegelt.

Eine entsprechende Absorption im sichtbaren Spektralbereich kann über das Glas gezielt erreicht werden, indem z.B. ganz oder teilweise Grünglas verwendet wird. Bevorzugt wird insbesondere, an der erfindungsgemässen Autoscheibe das äussere Glas aus Klarglas auszubilden, das innere, dem Autoinnern zugewandte Glas aus gefärbtem, absorbierendem Glas, also z.B. aus Grünglas. Da auch das absorbierte Licht zur Aufheizung beiträgt, gemäss der Sonnenschutzkennzahl E_{SONNE}, ist es am günstigsten, wenn die Sonnenstrahlung zuerst durch das wenig absorbierende Klarglas hindurch auf die reflektierende Beschichtung fällt und erst der nichtreflektierte Rest der Strahlung vom innern Grünglas teilweise absorbiert wird. Optimalerweise wird die Dicke des absorbierenden Glases so gewählt, dass die Transmission im Sichtbaren gerade noch den minimal geforderten Wert, für Autoscheiben von z.B. 75 %, erreicht.

Wie aus Tabelle 1 ersichtlich, ist die Sonnenschutzwirkung gemäss Kenngrösse E_{SONNE} vergleichbar mit derjenigen von D/M/D-Systemen auf Silberbasis, wobei, wie eingangs erwähnt wurde, erfindungsgemäss wesentliche Vorteile erreicht werden. Dies insbesondere, weil das erfindungsgemäss hergestellte Schichtsystem rein dielektrisch, also elektrisch nicht leitend, ist, wodurch z.B. Antennenscheiben und der Betrieb von Fernbedienungen, Telefon etc. durch das erfindungsgemäss hergestellte Verbundglas bzw. die erfindungsgemäss hergestellte Autoscheibe möglich werden. Weil Absorption im Sichtbaren und Reflexion im Infraroten am erfindungsgemäss hergestellten Verbundglas unabhängig voneinander sind, kann die Absorption des Verbundglases im sichtbaren Spektralbereich bei gleichbleibender Reflexion im nahen Infrarot flexibel praktisch beliebig zwischen beispielsweise 50 % bis unter 1 % eingestellt werden, während bei einem D/M/D-System eine niedrigere Absorption im sichtbaren Spektralbereich immer auch eine geringere Reflexion im nahen Infrarot bedeutet. Während gemäss Fig. 4 ein D/M/D-System bei guter Kenngrösse E_{SONNE} immer einen bläulich-lila-rötlichen Farbeindruck ergibt, können die dielektrischen Systeme auf der Folie bei gleicher Schichtanzahl der Beschichtung entweder auch im bläulich-lila-rötlichen Bereich liegen (siehe Beispiel 1 mit x = 3), oder aber für den neutralen/grünlichen Bereich optimiert werden (siehe Beispiel 2), ohne dass sich die Kenngrösse E_{SONNE} nennenswert ändert. Dieser "farbliche Freiheitsgrad" ist ein wesentlicher Vorteil, da damit beispielsweise Autoverglasungen nicht nur ihrem funktionellen Zweck entsprechen, sondern auch unter Designaspekten ausgelegt werden können.

Weil insbesondere mittels reaktivem DC-Magnetronsputtern ein kaltes Beschichtungsverfahren eingesetzt wird, ist es ohne weiteres möglich, grossindustriell Kunststoffolien damit zu beschichten. Bei einer Folienbeschichtungsanlage, einem sogenannten "roll coater", wird nämlich eine Endlosfolie von einer Rolle abgewickelt, an den Beschichtungsquellen vorbeigeführt und anschliessend wieder auf eine Rolle aufgewickelt. Demgegenüber muss für die Beschichtung auf planer Glasscheibe, üblicherweise in "in line"-Anlagen, ein grosses Substratvolumen gehandlet und durch eine Vakuumkammer geführt werden. Somit ist ein Glasbeschichtungsgprozess bzw. eine derartige "in line"-Anlage, auch was Wartung und Reparatur anbelangt, wesentlich aufwendiger als eine Folienbeschichtungsanlage, insbesondere betrachtet pro beschichtete Flächeneinheit. Damit ergeben sich für das erfindungsgemäss hergestellte Verbundglas mit der beschichteten Kunststoffolie wesentliche weitere Fertigungsvorteile.

## Patentansprüche

1. Verfahren zur Herstellung eines Verbundglas-Wärmeschutzsystems, bei welchem eine Kunststofffolie zwischen Glasplatten und, zwischen Kunststofffolie und Glasplatten, mindestens ein Teil einer ausschliesslich aus dielektrischen Schichten bestehenden Schutzbeschichtung eingebettet werden, **dadurch gekennzeichnet, dass**
• mindestens der Teil der Schutzbeschichtung durch Beschichten auf die Folien aufgebracht wird;
• die Kunststofffolie mit dem Teil der Schutzbeschichtung zwischen den Glasplatten eingebettet wird und
• die Schutzbeschichtung so ausgebildet wird, dass am Verbundglas-Wärmeschutzsystem ein Reflektionsmaximum für Licht einer Wellenlänge λ im Spektralbereich $780 nm \leq λ \leq 1200 nm$ sowie ein Transmissionsmaximum im Spektralbereich $380 nm \leq λ \leq 780 nm$ erreicht wird.

2. Verfahren nach Anspruch 1, **dadurch gekennzeichnet, dass** der Teil der Schutzbeschichtung durch Sputtern auf die Folie aufgebracht wird.

3. Verfahren nach Anspruch 2, **dadurch gekennzeichnet, dass** reaktives Sputtern eingesetzt wird.

4. Verfahren nach Anspruch 2, **dadurch gekennzeichnet, dass** das Sputtern mittels AC, DC mit überlagertem AC oder gepulstem DC vorgenommen wird, mit AC bis in den Hf-Bereich, vorzugsweise jeweils mittels Magnetron-Sputtern und insbesondere bevorzugt DC-Sputtern, dabei weiter insbesondere bevorzugt DC-Magnetron Sputtern.

5. Verfahren nach einem der Ansprüche 1 bis 4, **dadurch gekennzeichnet, dass** eine Folie aus PET eingesetzt wird.

6. Verfahren nach Anspruch 1, **dadurch gekennzeichnet, dass** das Reflexionsmaximum im Spektralbereich $800 nm \leq λ \leq 1100 nm$ vorzugsweise im Spektralbereich $850 nm \leq λ \leq 1000 nm$ realisiert wird.

7. Verfahren nach einem der Ansprüche 1 bis 6, **dadurch gekennzeichnet, dass** die Schutzbeschichtung aus mindestens einer Schicht hochbrechenden Materials und mindestens einer Schicht niedriger brechenden Materials realisiert wird und für den Brechwert n_{H} des hochbrechenden Materials gewählt wird: ${n}_{H} \geq 2 , 40$ vorzugsweise ${n}_{H} \geq 2 , 45$ insbesondere bevorzugt ${n}_{H} \geq 2 , 55 ,$ jeweils bei einer Wellenlänge λ = 550nm, und dass für den Brechwert n_{L} des niedriger brechenden Materials gewählt wird: ${n}_{L} \leq 1 , 7$ vorzugsweise ${n}_{L} \leq 1 , 5$ ebenfalls bei λ =550 nm.

8. Verfahren nach einem der Ansprüche 1 bis 7, **dadurch gekennzeichnet, dass**, bezogen auf die Dichte der für die Schutzbeschichtung verwendeten Materialien im Bulk, die Packungsdichte der Schichtmaterialien zu mindestens 95%, vorzugsweise zu mindestens 97% erstellt wird.

9. Verfahren nach einem der Ansprüche 1 bis 8, **dadurch gekennzeichnet, dass** die Schutzbeschichtung röntgenamorph erstellt wird.

10. Verfahren nach einem der Ansprüche 1 bis 9, **dadurch gekennzeichnet, dass** die Schutzbeschichtung so abgelegt wird, dass die Temperaturdrift des Spektralverhaltens höchstens 0,5% ist, im Temperaturbereich zwischen 20°C und 120°C.

11. Verfahren nach einem der Ansprüche 1 bis 10, **dadurch gekennzeichnet, dass** die Schutzbeschichtung aus einem Schichtpaket mit mindestens einer Schicht eines hochbrechenden Materials und mindestens einer Schicht eines niedriger brechenden Materials erstellt wird, wobei als hochbrechendes Material mindestens eines der folgenden Gruppe eingesetzt wird:
Oxide, Oxinitride von Ti, Ta, Hf, Zr, Zn, dabei bevorzugterweise TiO₂.

12. Verfahren nach einem der Ansprüche 1 bis 11, **dadurch gekennzeichnet, dass** die Schutzbeschichtung aus mindestens einem Schichtpaket mit mindestens einer Schicht aus hochbrechendem Material und mindestens einer Schicht aus niedriger brechendem Material erstellt wird, und dass als niedriger brechendes Material mindestens eines aus der folgenden Gruppe gewählt wird: SiOₓ, SiO_{N}, SiO₂, dabei bevorzugterweise SiO₂.

13. Verfahren nach einem der Ansprüche 1 bis 12, **dadurch gekennzeichnet, dass** die Absorption der Schutzbeschichtung im sichtbaren Spektralbereich zu mindestens 3% erstellt wird, vorzugsweise zu wesentlich mehr.

14. Verfahren nach einem der Ansprüche 1 bis 13, **dadurch gekennzeichnet, dass** Schichten der Schutzbeschichtung gleichen Materials mit einer Toleranz von ± 15% gleich dick erstellt werden.

15. Verfahren nach einem der Ansprüche 1 bis 14, **dadurch gekennzeichnet, dass** Glasplatten unterschiedlicher Gläser eingesetzt werden.

16. Verfahren nach einem der Ansprüche 1 bis 15, **dadurch gekennzeichnet, dass** ein ballistisches Verbundglas-Wärmeschutzsystem erstellt wird.

17. Verfahren nach einem der Ansprüche 1 bis 16, **dadurch gekennzeichnet, dass** als Kunststofffolie ein Folienpaket eingesetzt wird, vorzugsweise aus mindestens einer PVB-, mindestens einer anschliessenden PET- dann wieder einer PVB- Folie und dass, weiter bevorzugterweise, der Teil der Schutzbeschichtung auf der PET-Folie aufgebracht wird.

18. Verfahren nach einem der Ansprüche 1 bis 17, **dadurch gekennzeichnet, dass** Fensterteile, vorzugsweise Fahrzeugfensterteile wie Auto-, Flugzeug- oder Eisenbahnfensterteile, hergestellt werden.

19. Verfahren nach einem der Ansprüche 1 bis 18, **dadurch gekennzeichnet, dass** die Glasplatten, vor dem Einbetten der Folie mit dem Teil der Schutzbeschichtung, gebogen werden.

20. Verfahren nach einem der Ansprüche 1 bis 19, **dadurch gekennzeichnet, dass** eine Glasplatte aus Klarglas, mindestens eine zweite aus einem gefärbten Glas, vorzugsweise aus Grünglas, eingesetzt wird.

21. Verfahren nach einem der Ansprüche 1 bis 20, **dadurch gekennzeichnet, dass** die Schutzbeschichtung so erstellt wird, dass am Verbundglas-Wärmeschutzsystem für senkrechten Lichteinfall gilt: ${E}_{Sonne} \leq 65 %$ vorzugsweise ${E}_{Sonne} \leq 60 % .$

22. Verfahren nach einem der Ansprüche 1 bis 21, **dadurch gekennzeichnet, dass** die Schutzbeschichtung so erstellt wird, dass am Verbundglas-Wärmeschutzsystem für senkrechten Lichteinfall gilt: ${R}_{VIS} \leq 13 % ,$ vorzugsweise ${R}_{VIS} \leq 12 % .$

23. Verfahren nach einem der Ansprüche 1 bis 22, **dadurch gekennzeichnet, dass** die Schutzbeschichtung so abgelegt wird, dass am Verbundglas-Wärmeschutzsystem für senkrechten Lichteinfall gilt: ${T}_{VIS} \geq 70 % ,$ vorzugsweise ${T}_{VIS} \geq 75 % .$

24. Verfahren nach einem der Ansprüche 1 bis 23, **dadurch gekennzeichnet, dass** die Schutzbeschichtung so abgelegt wird, dass am Verbundglas-Wärmeschutzsystem für senkrechten Lichteinfall gilt: ${T}_{Sonne} \leq 55 %$ vorzugsweise ${T}_{Sonne} \leq 50 % .$

25. Verfahren nach einem der Ansprüche 1 bis 24 **dadurch gekennzeichnet, dass** die Schutzbeschichtung so abgelegt wird, dass am Verbundglas-Wärmeschutzsystem für senkrechten Lichteinfall gilt ${R}_{Sonne} \geq 20 % ,$ vorzugsweise ${R}_{Sonne} \geq 23 % .$

## Claims

1. Method for production of a laminated glass heat protection system in which a plastic film is embedded between glass plates, and between the plastic film and the glass plates is embedded at least part of a protective coating comprising exclusively dielectric layers, **characterised in that**
- at least the part of the protective coating is applied to the films by coating;
- the plastic film with the part of the protective coating is embedded between the glass plates; and
- the protective coating is formed so that on the laminated glass heat protection system a reflection maximum is achieved for light of wavelength λ in the spectrum range $780 nm \leq λ \leq 1200 nm$ and a transmission maximum in the spectrum range $380 nm \leq λ \leq 780 nm .$

2. Method according to claim 1, **characterised in that** the part of the protective coating is applied to the film by sputtering.

3. Method according to claim 2, **characterised in that** reactive sputtering is used.

4. Method according to claim 2, **characterised in that** the sputtering is performed by means of AC, DC with overlaid AC or pulsed DC, with AC up to the Hf range, preferably in each case by means of magnetron sputtering and particularly preferably DC sputtering, further particularly preferably DC magnetron sputtering.

5. Method according to any of claims 1 to 4, **characterised in that** a film of PET is used.

6. Method according to claim 1, **characterised in that** the reflection maximum is achieved in the spectrum range $800 nm \leq λ \leq 1100 nm$ preferably in the spectrum range $850 nm \leq λ \leq 1000 nm .$

7. Method according to any of claims 1 to 6, **characterised in that** the protective coating comprises at least one layer of high refraction material and at least one layer of lower refraction material and for the refractive value n_{H} of the high refraction material is selected: ${n}_{H} \geq 2.40$ preferably ${n}_{H} \geq 2.45$ particularly preferably ${n}_{H} \geq 2.55$ in each case at a wavelength λ = 550 nm, and that for the refractive value n_{L} of the lower refraction material is selected: ${n}_{L} \leq 1.7$ preferably ${n}_{L} \leq 1.5$ also at λ = 550 nm.

8. Method according to any of claims 1 to 7, **characterised in that** in relation to the bulk density of the materials used for the protective coating, the packing density of the layer material is constructed to at least 95%, preferably at least 97%.

9. Method according to any of claims 1 to 8, **characterised in that** the protective coating is produced X-ray-amorphous.

10. Method according to any of claims 1 to 9, **characterised in that** the protective coating is deposited so that the temperature drift of the spectrum behaviour is maximum 0.5% in the temperature range between 20°C and 120°C.

11. Method according to any of claims 1 to 10, **characterised in that** the protective coating is produced from a layer packet with at least one layer of a high refraction material and at least one layer of a lower refraction material, where as a high refraction material at least one of the following group is used: oxides, oxinitrides of Ti, Ta, Hf, Zr, Zn, preferably TiO₂.

12. Method according to any of claims 1 to 11, **characterised in that** the protective coating comprises at least one layer packet with at least one layer of high refraction material and at least one layer of lower refraction material, and that as a lower refraction material at least one of the following groups is selected: SiOₓ, SiO_{N}, SiO₂, preferably SiO₂.

13. Method according to any of claims 1 to 12, **characterised in that** the absorption of the protective coating in the visible spectrum range is constructed to at least 3%, preferably substantially more.

14. Method according to any of claims 1 to 13, **characterised in that** layers of the protective coating of the same material are produced equally thick with a tolerance of ± 15%.

15. Method according to any of claims 1 to 14, **characterised in that** glass plates of different glasses are used.

16. Method according to any of claims 1 to 15, **characterised in that** a ballistic laminated glass heat protection system is produced.

17. Method according to any of claims 1 to 16, **characterised in that** as a plastic film a film packet is used, preferably comprising at least one PVB film, at least one subsequent PET film then a further PVB film, and that further preferably the part of the protective coating is applied to the PET film.

18. Method according to any of claims 1 to 17, **characterised in that** window elements are produced, preferably window elements for vehicles such as motor vehicle, aircraft or rail vehicle window elements.

19. Method according to any of claims 1 to 18, **characterised in that** the glass plates are bent before embedding of the film with the part of the protective coating.

20. Method according to any of claims 1 to 19, **characterised in that** one glass plate is used of clear glass, at least one second plate of a coloured glass, preferably a green glass.

21. Method according to any of claims 1 to 20, **characterised in that** the protective coating is constructed such that for the laminated glass heat protection system for vertical light incidence the following applies: ${E}_{Sonne} \leq 65 %$ preferably ${E}_{Sonne} \leq 60 % .$

22. Method according to any of claims 1 to 21, **characterised in that** the protective coating is constructed such that on the laminated glass heat protection system for vertical light incidence the following applies: ${R}_{VIS} \leq 13 %$ preferably ${R}_{VIS} \leq 12 % .$

23. Method according to any of claims 1 to 22, **characterised in that** the protective coating is deposited such that on the laminated glass heat protection system for vertical light incidence the following applies: ${T}_{VIS} \geq 70 %$ preferably ${T}_{VIS} \geq 75 % .$

24. Method according to any of claims 1 to 23, **characterised in that** the protective coating is deposited such that on the laminated glass heat protection system for vertical light incidence the following applies: ${T}_{Sonne} \leq 55 %$ preferably ${T}_{Sonne} \leq 50 %$

25. Method according to any of claims 1 to 24, **characterised in that** the protective coating is deposited such that on the laminated glass heat protection system for vertical light incidence the following applies: ${R}_{Sonne} \geq 20 %$ preferably ${R}_{Sonne} \geq 23 % .$

## Revendications

1. Procédé pour fabriquer un système anticalorique de verre feuilleté, selon lequel on insère entre des plaques de verre un film de matière plastique, et entre ce film et les plaques de verre une partie au moins d'un revêtement de protection composé uniquement de couches diélectriques, **caractérisé en ce que**
- la partie, au moins, du revêtement de protection est appliquée par enduction sur les films ;
- le film de matière plastique est inséré avec la partie du revêtement de protection entre les plaques de verre, et
- le revêtement de protection est conçu pour qu'on obtienne sur le système anticalorique de verre feuilleté un maximum de réflexion pour la lumière d'une longueur d'onde λ dans le domaine spectral $780 nm \leq λ \leq 1200 nm$ et un maximum de transmission dans le domaine spectral $380 nm \leq λ \leq 780 nm .$

2. Procédé selon la revendication 1, **caractérisé en ce que** la partie du revêtement de protection est appliquée sur le film par pulvérisation cathodique.

3. Procédé selon la revendication 2, **caractérisé en ce qu'**on utilise une pulvérisation cathodique réactive.

4. Procédé selon la revendication 2, **caractérisé en ce que** la pulvérisation cathodique est réalisée à l'aide de courant alternatif, de courant continu superposé d'un courant continu, ou de courant continu pulsé, le courant alternatif allant jusque dans la zone haute fréquence, de préférence à l'aide de pulvérisation cathodique par magnétron et plus spécialement par pulvérisation cathodique avec courant continu, et encore plus spécialement par pulvérisation cathodique par magnétron à courant continu.

5. Procédé selon l'une des revendications 1 à 4, **caractérisé en ce qu'**on utilise un film en PET.

6. Procédé selon la revendication 1, **caractérisé en ce que** le maximum de réflexion est réalisé dans le domaine spectral $800 nm \leq λ \leq 1100 nm ,$ de préférence dans le domaine spectral $850 nm \leq λ \leq 1000 nm .$

7. Procédé selon l'une des revendications 1 à 6, **caractérisé en ce que** le revêtement de protection est réalisé à partir d'au moins une couche de matière très réfringente et d'au moins une couche de matière moins réfringente, et on choisit pour l'indice de réfraction n_{H} de la matière très réfringente : ${n}_{H} \geq 2 , 40 ,$ de préférence ${n}_{H} \geq 2 , 45 ,$ et plus spécialement ${n}_{H} \geq 2 , 55 ,$ pour une longueur d'onde λ=550 nm, et **en ce qu'**on choisit pour l'indice de réfraction n_{L} de la matière moins réfringente : ${n}_{L} \leq 1 , 7 ,$ de préférence ${n}_{L} \leq 1 , 5 ,$ également pour λ=550 nm.

8. Procédé selon l'une des revendications 1 à 7, **caractérisé en ce que** par rapport à la densité des matières en vrac utilisées pour le revêtement de protection, on obtient une densité de compactage des matières de couches d'au moins 95 %, de préférence d'au moins 97 %.

9. Procédé selon l'une des revendications 1 à 8, **caractérisé en ce que** le revêtement de protection est réalisé amorphe aux rayons X.

10. Procédé selon l'une des revendications 1 à 9, **caractérisé en ce que** le revêtement de protection est déposé de sorte que la dérive de température du comportement spectral soit au maximum de 0,5 %, dans la plage de température située entre 20°C et 120°C.

11. Procédé selon l'une des revendications 1 à 10, **caractérisé en ce que** le revêtement de protection est réalisé à partir d'un paquet de couches comprenant au moins une couche de matière très réfringente et au moins une couche d'une matière moins réfringente, étant précisé qu'on utilise comme matière très réfringente l'un au moins des éléments du groupe constitué par : les oxydes, les oxynitrures de Ti, Ta, Hf, Zr, Zn, de préférence TiO₂.

12. Procédé selon l'une des revendications 1 à 11, **caractérisé en ce que** le revêtement de protection est réalisé à partir d'au moins un paquet de couches comprenant au moins une couche de matière très réfringente et au moins une couche de matière moins réfringente, et **en ce qu'**on choisit comme matière moins réfringente l'un au moins des éléments du groupe constitué par : SiOₓ, SiO_{N}, SiO₂, de préférence SiO₂.

13. Procédé selon l'une des revendications 1 à 12, **caractérisé en ce que** l'absorption du revêtement de protection est réalisé à au moins 3 % dans le domaine spectral visible, de préférence nettement plus.

14. Procédé selon l'une des revendications 1 à 13, **caractérisé en ce que** les couches du revêtement de protection de même matière sont réalisées avec la même épaisseur, avec une tolérance de ± 15 %.

15. Procédé selon l'une des revendications 1 à 14, **caractérisé en ce qu'**on utilise des plaques de verre composées de verres différents.

16. Procédé selon l'une des revendications 1 à 15, **caractérisé en ce qu'**on réalise un système anticalorique de verre feuilleté balistique.

17. Procédé selon l'une des revendications 1 à 16, **caractérisé en ce qu'**on utilise comme film de matière plastique un paquet de films, de préférence composé d'au moins un film de PVB, puis d'au moins un film de PET et à nouveau d'un film de PVB, et **en ce que** plus spécialement la partie du revêtement de protection est appliquée sur le film PET.

18. Procédé selon l'une des revendications 1 à 17, **caractérisé en ce qu'**on fabrique des éléments de fenêtres, de préférence des éléments de fenêtres de véhicules comme des éléments de fenêtres pour automobile, pour avion ou pour chemin de fer.

19. Procédé selon l'une des revendications 1 à 18, **caractérisé en ce que** les plaques de verre sont cintrées avant l'insertion du film avec la partie du revêtement de protection.

20. Procédé selon l'une des revendications 1 à 19, **caractérisé en ce qu'**on utilise une plaque de verre en verre clair, au moins une deuxième en verre teinté, de préférence en verre vert.

21. Procédé selon l'une des revendications 1 à 20, **caractérisé en ce que** le revêtement de protection est réalisé de sorte qu'on ait sur le système anticalorique de verre feuilleté, pour l'incidence de la lumière verticale : ${E}_{soleil} \leq 65 % ,$ de préférence ${E}_{soleil} \leq 60 % .$

22. Procédé selon l'une des revendications 1 à 21, **caractérisé en ce que** le revêtement de protection est réalisé de sorte qu'on ait sur le système anticalorique de verre feuilleté, pour l'incidence de la lumière verticale : ${R}_{VIS} \leq 13 % ,$ de préférence ${R}_{VIS} \leq 12 % .$

23. Procédé selon l'une des revendications 1 à 22, **caractérisé en ce que** le revêtement de protection est déposé de sorte qu'on ait sur le système anticalorique de verre feuilleté, pour l'incidence de la lumière verticale : ${T}_{VIS} \geq 70 % ,$ de préférence ${T}_{VIS} \geq 75 % .$

24. Procédé selon l'une des revendications 1 à 23, **caractérisé en ce que** le revêtement de protection est déposé de sorte qu'on ait sur le système anticalorique de verre feuilleté, pour l'incidence de la lumière verticale : ${T}_{soleil} \leq 55 % ,$ de préférence ${T}_{soleil} \leq 50 % .$

25. Procédé selon l'une des revendications 1 à 24, **caractérisé en ce que** le revêtement de protection est déposé de sorte qu'on ait sur le système anticalorique de verre feuilleté, pour l'incidence de la lumière verticale, ${R}_{soleil} \geq 20 % ,$ de préférence ${R}_{soleil} \geq 23 % .$
